# EUROPÄISCHE PATENTANMELDUNG

(11) **EP 3 450 509 A1**
(43) Veröffentlichungstag der Anmeldung: **06.03.2019**
(21) Anmeldenummer: 17188421.6
(22) Anmeldetag: 29.08.2017
(51) Int. Cl.: C09D 5/08, C09D 175/00

(54) **ZUSAMMENSETZUNG ZUM AUFTRAGEN AUF EINER OBERFLÄCHE ZUR AUSBILDUNG EINER SALZ- UND SOLEFESTEN BESCHICHTUNG, VERFAHREN ZUR HERSTELLUNG EINER SOLCHEN ZUSAMMENSETZUNG, DEREN VERWENDUNG, VERFAHREN ZUR BESCHICHTUNG EINES GEGENSTANDS UND HARZHALTIGE BESCHICHTUNG**

(71) Anmelder: Kirchmayer, Johann, 8020 Graz (AT); Höller, Anita, 8073 Feldkirchen bei Graz (AT)
(72) Erfinder: Baumgärtner, Harald, 5600 St. Johann im Pongau (AT)

(57) **Zusammenfassung**

Die vorliegende Erfindung betrifft eine Zusammensetzung zum Auftragen auf einer Oberfläche, zum Beispiel von Metallen oder Lacken, zur Ausbildung einer salz- und solefesten Beschichtung, wobei die Zusammensetzung Harz, organisches Titanat, Zellstofffaser und organisches Lösungsmittel umfasst. Des Weiteren betrifft die vorliegende Erfindung ein Verfahren zur Herstellung einer solchen Zusammensetzung, deren Verwendung, ein Verfahren zur Beschichtung eines Gegenstands und eine harzhaltige Beschichtung.

## Beschreibung

### GEBIET DER ERFINDUNG

Die vorliegende Erfindung betrifft eine Zusammensetzung zum Auftragen auf einer Oberfläche, zum Beispiel von Metallen oder Lacken, zur Ausbildung einer salz- und solefesten Beschichtung bzw. eines salz- und solefesten Überzugs. Des Weiteren betrifft die vorliegende Erfindung ein Verfahren zur Herstellung einer solchen Zusammensetzung, deren Verwendung, ein Verfahren zur Beschichtung eines Gegenstands und eine harzhaltige Beschichtung.

### HINTERGRUND

Es besteht in verschiedenen Bereichen ein Bedarf, vorhandene Metall- und Lackteile, aber auch neu verzinkte, sowie Teile die mit dem KTL-Verfahren (kathodische Tauchlackierung) bearbeitet wurden, bzw. beschädigte Stellen nach dem Schweißen, Schneiden oder Kleben, vor einer Verätzung durch Salze, Nitraten und Solelösungen zu schützen. Dazu zählen beispielsweise Metallteile und Lacke, die an Fahrzeugen, Geräten und Bootsteile der Versprühung ausgesetzt sind.

Aus dem Stand der Technik sind verschiedene Beschichtungen bekannt, die auf Öl- oder Wachsbasis beruhen, um kurzfristig einen Schutzfilm zu bilden, der sich aber durch Abrieb schnell auflöst.

Bei den bekannten Zusammensetzungen des derzeitigen Standes der Technik ist nachteilig, dass diese oftmals wiederholt aufgetragen werden müssen, da durch die Lösungen meist nur ein Schutz von 3 bis 5 Tagen vorhanden ist. Durch Temperatureinflüsse werden diese meistens entweder verflüssigt und demzufolge aufgelöst, oder durch Kälte verhärtet und demzufolge mechanisch durch die Bewegung der Geräte abgeschabt. Die verbleibenden Reste lassen sich nur sehr schwer entfernen.

Es besteht daher ein Bedarf an einer Verbesserung von Beschichtungen, insbesondere zum Korrosionsschutz, ohne den oben beschriebenen Einschränkungen bzw. Nachteilen zu unterliegen.

### AUFGABEN DER ERFINDUNG

Eine Aufgabe der vorliegenden Erfindung ist es daher, eine Zusammensetzung bereitzustellen, die auf einfache Weise auf einen Gegenstand aufgebracht werden kann und dabei bei allen Temperaturen eine schützende, nicht frei sichtbare Beschichtung bildet, die auch mechanisch sehr stabil ist.

Des Weiteren ist angestrebt, ein einfaches und effizientes Verfahren zum Herstellen einer derartigen Zusammensetzung bereitzustellen sowie ein einfaches und effizientes Beschichtungsverfahren bereitzustellen.

Darüber hinaus ist es ein Ziel der vorliegenden Erfindung, ein harzhaltige Beschichtung bereitzustellen, die mechanisch sehr stabil ist und über einen weiten Temperaturbereich den damit beschichteten Gegenstand vor Umwelteinflüssen, wie Korrosion, schützt.

### ZUSAMMENFASSUNG DER ERFINDUNG

Die Erfinder der vorliegenden Erfindung haben umfangreiche Studien zur Lösung dieser Aufgaben durchgeführt und insbesondere herausgefunden, dass mit einer Zusammensetzung, die neben Harz und organischem Lösungsmittel ein organisches Titanat und Zellstofffaser enthalten, die erfindungsgemäß gewünschten Eigenschaften erzielt werden können.

Die vorliegende Erfindung betrifft dementsprechend eine Zusammensetzung zum Auftragen auf einer Oberfläche zur Ausbildung einer Beschichtung bzw. eines Überzugs, wobei die Zusammensetzung Harz, organisches Titanat, Zellstofffaser und organisches Lösungsmittel umfasst.

Des Weiteren betrifft die vorliegende Erfindung ein Verfahren zur Herstellung einer Zusammensetzung zum Auftragen auf einer beliebigen Oberfläche (gleich welcher Art), insbesondere einer erfindungsgemäßen Zusammensetzung, umfassend folgende Schritte:
zumindest teilweises Lösen eines Harzes in einem organischen Lösungsmittel, insbesondere Xylol,
Lösen von organischem Titanat und Zellstofffaser in einem organischen Lösungsmittel, insbesondere Nitroverdünnung,
optional Lösen von mindestens einem Additiv, ausgewählt aus der Gruppe, bestehend aus Härter, Verlaufmittel, Glänzer und Schnelltrockner, in einem organischen Lösungsmittel, insbesondere Isopropanol,
Mischen der hergestellten Lösungen bzw. Suspension (im Folgenden auch als (erfindungsgemäßes) Herstellungsverfahren bezeichnet).

Die erfindungsgemäße Zusammensetzung kann insbesondere zur Ausbildung einer Beschichtung eingesetzt werden, die den damit beschichteten Gegenstand vor Umwelteinflüssen, wie Korrosion, schützen kann.

Dementsprechend betrifft die vorliegende Erfindung auch die Verwendung der erfindungsgemäßen Zusammensetzung zur Herstellung einer Beschichtung auf einem Gegenstand durch Aufbringen bzw. Auftragen der Zusammensetzung.

Weiterhin betrifft die vorliegende Erfindung ein Verfahren zur Beschichtung eines Gegenstands, das einen Schritt des Auftragens einer erfindungsgemäßen Zusammensetzung auf einer Oberfläche des Gegenstands umfasst (im Folgenden auch als (erfindungsgemäßes) Beschichtungsverfahren bezeichnet).

Darüber hinaus betrifft die vorliegende Erfindung eine harzhaltige Beschichtung, gebildet aus einer erfindungsgemäßen Zusammensetzung bzw. erhältlich nach einem erfindungsgemäßen Beschichtungsverfahren.

Ein mit der Erfindung erzielter Vorteil ist insbesondere darin zu sehen, dass eine Zusammensetzung bereitgestellt wird, die auf einfache Weise bei Temperaturen ab -5°C auf Oberflächen aufgetragen werden kann, beispielsweise durch Aufsprühen, Streichen, Rollen, Rakeln und in vorgesehenen Becken Tauchen. Die Temperatur des Tauchmaterials sollte aber nicht höher als 70°C sein. Auf Grund der eingesetzten organischen Lösungsmittel (wie z.B. Alkohole) kann die Zusammensetzung mit optimaler Geschwindigkeit einziehen und einen schützenden Film in der gewünschten Stärke und Zeit, bilden. Die organischen Lösungsmittel und optionalen Additive in der erfindungsgemäßen Zusammensetzung sorgen für Glanz, Härte und eine glatte Oberfläche ohne Inhomogenität.

Eine mit der erfindungsmäßigen Zusammensetzung erhältliche Beschichtung zeichnet sich durch eine sehr gute Säurefestigkeit bzw. Korrosionsbeständigkeit gegenüber einer Anwendungsflüssigkeit mit einem Salzanteil von 28% Lösung sowie einer 30% Solelösung aus, was nachweislich über eine Winterperiode ausreichend ist. Nach der Winterperiode kann bei Servicearbeiten die Schicht gereinigt und bei Beschädigungen wieder ausgebessert werden. Die erfindungsmäßige Beschichtung zeichnet sich nachweislich durch Langlebigkeit aus.

Weitere Aufgaben und Vorteile von Ausführungsformen der vorliegenden Erfindung werden an Hand der folgenden detaillierten Beschreibung ersichtlich.

### DETAILLIERTE BESCHREIBUNG DER ERFINDUNG

Im Folgenden werden nähere Details der vorliegenden Erfindung und weitere Ausführungsformen davon beschrieben. Die vorliegende Erfindung ist jedoch nicht auf die folgende detaillierte Beschreibung beschränkt, sondern sie dient lediglich der Veranschaulichung der erfindungsgemäßen Lehren.

Es sei darauf hingewiesen, dass Merkmale, die im Zusammenhang mit einer beispielhaften Ausführungsform oder einem beispielhaftem Gegenstand beschrieben werden, mit jeder anderen beispielhaften Ausführungsform oder mit jedem anderen beispielhaften Gegenstand kombiniert werden können. Insbesondere können Merkmale, die im Zusammenhang mit einer beispielhaften Ausführungsform der erfindungsgemäßen Zusammensetzung beschrieben werden, mit jeder anderen beispielhaften Ausführungsform der erfindungsgemäßen Zusammensetzung sowie mit jeder beispielhaften Ausführungsform der erfindungsgemäßen Verfahren, Verwendungen und Beschichtungen kombiniert werden und umgekehrt, sofern nicht ausdrücklich etwas anderes vermerkt ist.

Wenn ein Begriff mit einem unbestimmten oder bestimmten Artikel, wie zum Beispiel "ein", "eine", "eines", "der", "die" und "das", im Singular bezeichnet wird, schließt dies auch den Begriff im Plural mit ein und umgekehrt, sofern der Kontext nicht eindeutig anderes festlegt. Der Ausdruck "umfassend", wie er hier verwendet wird, schließt nicht nur die Bedeutung von "enthalten" oder "beinhalten" ein, sondern kann auch "bestehen aus" und "im Wesentlichen bestehen aus" bedeuten.

Die Zusammensetzung zum Auftragen auf einer Oberfläche zur Ausbildung einer Beschichtung bzw. eines Überzugs umfasst mindestens ein Harz, mindestens ein organisches Titanat, mindestens eine Zellstofffaser (Cellulosefaser) und mindestens ein organisches Lösungsmittel. Weitere Bestandteile, wie insbesondere mindestens ein Additiv, ausgewählt aus der Gruppe, bestehend aus Härter, Verlaufmittel, Glänzer und Schnelltrockner, können enthalten sein. Die Zusammensetzung kann insbesondere eine flüssige Zusammensetzung sein.

In einer beispielhaften Ausführungsform ist die Zusammensetzung eine (klare) Lösung, d.h. sämtliche Bestandteile oder Komponenten der Zusammensetzung lösen sich im Wesentlichen vollständig in dem verwendeten Lösungsmittel.

In einer alternativen Ausführungsform ist die Zusammensetzung eine Dispersion, insbesondere eine Suspension, d.h. eine oder mehrere Bestandteile oder Komponenten der Zusammensetzung lösen sich nicht oder nur teilweise in dem verwendeten Lösungsmittel. Die Zusammensetzung kann somit (feste) Partikel von einer oder mehreren Komponenten enthalten. Insbesondere kann es sein, dass sich das Harz nicht vollständig löst. Die Zusammensetzung kann somit eine Suspension sein, die Harzpartikel enthält.

In einer beispielhaften Ausführungsform enthält die Zusammensetzung maximal 40 Gew.-% Harz, insbesondere maximal 35 Gew.-% Harz, insbesondere maximal 30 Gew.-% Harz, insbesondere maximal 25 Gew.-% Harz. Die Zusammensetzung kann insbesondere mindestens 5 Gew.-% Harz, insbesondere mindestens 10 Gew.-% Harz, insbesondere mindestens 15 Gew.-% Harz, umfassen. In einer beispielhaften Ausführungsform enthält die Zusammensetzung etwa 20 Gew.-% Harz.

Das Harz kann ein natürliches Harz und/oder ein Kunstharz umfassen. Das Harz kann insbesondere ein Polymerharz umfassen. In einer beispielhaften Ausführungsform kann das Harz aus der Gruppe, bestehend aus Urethanharz, Harz aus Ahorn (Ahornharz), Harz aus Birke (Birkenharz) und Mischungen davon, ausgewählt sein. Zum Beispiel hat sich ein Urethanharz mit einer Beimischung von Harz aus Ahorn oder Harz aus Birke als besonders geeignet erwiesen.

In einer beispielhaften Ausführungsform enthält die Zusammensetzung mindestens 2 Gew.-% organisches Titanat, insbesondere mindestens 5 Gew.-% organisches Titanat, insbesondere mindestens 7,5 Gew.-% organisches Titanat, und maximal 20 Gew.-% organisches Titanat, insbesondere maximal 15 Gew.-% organisches Titanat, insbesondere maximal 12,5 Gew.-% organisches Titanat. In einer beispielhaften Ausführungsform enthält die Zusammensetzung etwa 10 Gew.-% organisches Titanat.

Unter einem "organischen Titanat" im Sinne der vorliegenden Anmeldung wird im Allgemeinen ein organischer Ester einer Titansäure verstanden. Beispiele hierfür beinhalten Tetraalkyltitanate, wie Tetramethyltitanat, Tetrabutyltitanat, Tetraisopropyltitanat oder Tetrahexyltitanat, Tetraphenyltitanat und Dibutyltriethanolamintitanat.

In einer beispielhaften Ausführungsform enthält die Zusammensetzung mindestens 1 Gew.-% Zellstofffaser, insbesondere mindestens 2 Gew.-% Zellstofffaser, insbesondere mindestens 3 Gew.-% Zellstofffaser, und maximal 10 Gew.-% Zellstofffaser, insbesondere maximal 7,5 Gew.-% Zellstofffaser, insbesondere maximal 5 Gew.-% Zellstofffaser. In einer beispielhaften Ausführungsform enthält die Zusammensetzung etwa 4 Gew.-% Zellstofffaser.

Unter einer "Zehstofffaser" im Sinne der vorliegenden Anmeldung wird im Allgemeinen eine Faser aus Cellulose verstanden, die beispielsweise eine Faserlänge von 60 bis 120 µm hat und je nach Verwendung beigefügt wird. Geeignete Zellstofffasern sind beispielsweise unter der Marke TECHNOCEL^{®} erhältlich.

In einer beispielhaften Ausführungsform ist das organische Lösungsmittel aus der Gruppe, bestehend aus Alkoholen, Ester, Ketone, aliphatische Kohlenwasserstoffe, aromatische Kohlenwasserstoffe und Mischungen davon, ausgewählt.

In einer beispielhaften Ausführungsform umfasst das organische Lösungsmittel Nitroverdünnung, insbesondere Nitroverdünnung AF. Unter "Nitroverdünnung" im Sinne der vorliegenden Anmeldung wird im Allgemeinen eine Einzelsubstanz oder eine Mischung aus Alkoholen (wie zum Beispiel Ethanol), Estern, Ketonen und/oder weiteren Kohlenwasserstoffen verstanden. Vorzugsweise ist die eingesetzte Nitroverdünnung im Wesentlichen frei von aromatischen Verbindungen, wie aromatischen Kohlenwasserstoffen. Nitroverdünnung, insbesondere Nitroverdünnung AF (aromatenfrei), hat sich als besonders vorteilhaft zum Lösen von sowohl dem organischem Titanat als auch der Zellstofffaser erwiesen.

In einer beispielhaften Ausführungsform umfasst das organische Lösungsmittel einen aromatischen Kohlenwasserstoff, wie insbesondere Xylol. Xylol hat sich als besonders vorteilhaft zum zumindest teilweise Lösen von Harz erwiesen.

In einer beispielhaften Ausführungsform umfasst das organische Lösungsmittel einen oder mehrere Alkohole, wie insbesondere Isopropanol. Isopropanol hat sich als besonders vorteilhaft zum Lösen der optionalen Additive erwiesen. Zur Vermeidung eines zu schnellen Verdampfens der Zusammensetzung beträgt der Anteil an Alkoholen vorzugsweise höchstens 60 Gew.-%, insbesondere höchstens 50 Gew.-%, bezogen auf die Zusammensetzung bzw. bezogen auf das organische Lösungsmittel.

In einer beispielhaften Ausführungsform umfasst die Zusammensetzung 10 bis 40 Gew.-% Harz, 5 bis 20 Gew.-% organisches Titanat, 2 bis 10 Gew.-% Zellstofffaser, optional Additive und der Rest organisches Lösungsmittel.

In einer beispielhaften Ausführungsform ist die erfindungsgemäße Zusammensetzung im Wesentlichen wasserfrei und/oder im Wesentlichen frei von Silikaten und Silikonen.

Ein Herstellungsverfahren, d.h. ein Verfahren zur Herstellung einer Zusammensetzung zum Auftragen auf einer beliebigen Oberfläche (gleich welcher Art), insbesondere einer erfindungsgemäßen Zusammensetzung, umfasst folgende Schritte:
zumindest teilweises Lösen eines Harzes in einem organischen Lösungsmittel, insbesondere Xylol,
Lösen von organischem Titanat und Zellstofffaser in einem organischen Lösungsmittel, insbesondere Nitroverdünnung,
optional Lösen von mindestens einem Additiv, ausgewählt aus der Gruppe, bestehend aus Härter, Verlaufmittel, Glänzer und Schnelltrockner, in einem organischen Lösungsmittel, insbesondere Isopropanol,
Mischen der hergestellten Lösungen bzw. Suspension.

Mit dem erfindungsgemäßen Herstellungsverfahren lässt sich unmittelbar und in einfacher Weise eine erfindungsgemäße Zusammensetzung herstellen, die leicht verarbeitet werden kann und bereits nach 5 Minuten einsatzbereit ist.

Ein weiteres Ziel der Erfindung wird durch die Verwendung einer Zusammensetzung zur Herstellung einer Beschichtung auf einem Gegenstand durch Aufbringen der Zusammensetzung erreicht, wobei die vorstehenden dargelegten Vorteile volle Wirkung entfalten.

Ein Beschichtungsverfahren, d.h. ein Verfahren zur Beschichtung eines Gegenstands, umfasst einen Schritt des Auftragens einer erfindungsgemäßen Zusammensetzung auf einer Oberfläche des Gegenstands.

In einer beispielhaften Ausführungsform umfasst das Auftragen ein Aufsprühen, Streichen, Rollen und/oder Rakeln der Zusammensetzung auf der Oberfläche des Gegenstands oder ein Tauchen bzw. Eintauchen des Gegenstands in die Zusammensetzung.

Eine harzhaltige Beschichtung bzw. ein harzhaltiger Überzug wird aus einer erfindungsgemäßen Zusammensetzung gebildet bzw. ist nach einem erfindungsgemäßen Beschichtungsverfahren erhältlich.

Weitere Merkmale, Vorteile und Wirkungen der Erfindung ergeben sich aus dem nachfolgenden Ausführungsbeispiel, das aber lediglich der Verdeutlichung der erfindungsgemäßen Lehren dienen und in keiner Weise den Umfang der vorliegenden Erfindung beschränken soll.

Im Folgenden ist die Herstellung einer beispielhaften erfindungsgemäßen Zusammensetzung beschrieben. Die Prozentangaben beziehen sich dabei auf die Anteile der jeweiligen Komponente in der fertigen Zusammensetzung:
20 Gew.-% von Partikeln aus Harzen in flüssiger Form in Xylol gelöst. Die organischen Titanate gelöst in Nitroverdünnung AF und zu dieser Mischung werden noch die Zellstofffasern Beigaben mitgelöst, bis sich eine rückstandsfreie, klare Flüssigkeit gebildet hat. Die Mischung und der Alkohol werden 4-5 Stunden gerührt und geschüttelt, um eine homogene Flüssigkeit zu erreichen.

Anschließend kommen die Verlaufmittel und Härter (erhältlich von der Firma Cytec) in Anteilen von 0,2 Gew.-% dazu und die komplette Flüssigkeit wird noch eine Stunde gerührt.

Die so erhaltene Flüssigkeit wird anschließend in dunkle, dichte Behälter abgefüllt.

Die erfindungsgemäße Zusammensetzung kann in diverse dichte Behälter, vorzugsweise in Metallkanister oder Metallsprayflaschen abgefüllt werden, Auch können zur Befüllung eines Kessels, zum Beispiel in einer Verzinkerei, diese direkt aus einem Tankwagen gefüllt werden. In der KFZ Branche werden aber Sprühbehälter bzw. Spraydosen bevorzugt. Die Zusammensetzung kann dann auf einfache Weise auf zu beschichtende Oberflächen aufgesprüht werden. Nach der Filmbildung, z.B. nach ca. 5 Minuten, kann die nicht sichtbare Beschichtung sofort in Einsatz gehen und ist nachher nur mehr mechanisch zu zerstören.

Die vorliegende Erfindung wurde an Hand spezifischer Ausführungsformen und einem Ausführungsbeispiel beschrieben. Die Erfindung ist aber nicht hierauf beschränkt und verschiedene Modifikationen hiervon sind möglich, ohne den Umfang der vorliegenden Erfindung zu verlassen.

## Patentansprüche

1. Zusammensetzung zum Auftragen auf einer Oberfläche zur Ausbildung einer Beschichtung, wobei die Zusammensetzung Folgendes umfasst:
• Harz,
• organisches Titanat,
• Zellstofffaser und
• organisches Lösungsmittel.

2. Zusammensetzung nach Anspruch 1, wobei die Zusammensetzung eine Lösung oder eine Suspension ist.

3. Zusammensetzung nach Anspruch 2, wobei die Zusammensetzung eine Suspension ist, die Harzpartikel enthält.

4. Zusammensetzung nach einem der vorherigen Ansprüche, wobei die Zusammensetzung maximal 40 Gew.-% Harz enthält.

5. Zusammensetzung nach einem der vorherigen Ansprüche, wobei das Harz ausgewählt ist aus der Gruppe, bestehend aus Urethanharz, Harz aus Ahorn, Harz aus Birke und Mischungen davon.

6. Zusammensetzung nach einem der vorherigen Ansprüche, wobei das organische Lösungsmittel ausgewählt ist aus der Gruppe, bestehend aus Alkoholen, Ester, Ketone, aliphatische Kohlenwasserstoffe, aromatische Kohlenwasserstoffe und Mischungen davon.

7. Zusammensetzung nach einem der vorherigen Ansprüche, wobei das organische Lösungsmittel Nitroverdünnung, insbesondere Nitroverdünnung AF, umfasst.

8. Zusammensetzung nach einem der vorherigen Ansprüche, wobei das Harz zumindest teilweise in Xylol gelöst ist.

9. Zusammensetzung nach einem der vorherigen Ansprüche, ferner umfassend mindestens ein Additiv, ausgewählt aus der Gruppe, bestehend aus Härter, Verlaufmittel, Glänzer und Schnelltrockner.

10. Zusammensetzung nach einem der vorherigen Ansprüche, wobei die Zusammensetzung Folgendes umfasst:
• 10 bis 40 Gew.-% Harz,
• 5 bis 20 Gew.-% organisches Titanat,
• 2 bis 10 Gew.-% Zellstofffaser,
• optional Additive und
• organisches Lösungsmittel.

11. Verfahren zur Herstellung einer Zusammensetzung zum Auftragen auf einer beliebigen Oberfläche, insbesondere einer Zusammensetzung gemäß einem der Ansprüche 1 bis 10, umfassend folgende Schritte:
zumindest teilweises Lösen eines Harzes in einem organischen Lösungsmittel, insbesondere Xylol,
Lösen von organischem Titanat und Zellstofffaser in einem organischen Lösungsmittel, insbesondere Nitroverdünnung,
optional Lösen von mindestens einem Additiv, ausgewählt aus der Gruppe, bestehend aus Härter, Verlaufmittel, Glänzer und Schnelltrockner, in einem organischen Lösungsmittel, insbesondere Isopropanol,
Mischen der hergestellten Lösungen bzw. Suspension.

12. Verwendung einer Zusammensetzung gemäß einem der Ansprüche 1 bis 10 zur Herstellung einer Beschichtung auf einem Gegenstand durch Aufbringen der Zusammensetzung.

13. Verfahren zur Beschichtung eines Gegenstands, umfassend einen Schritt des Auftragens einer Zusammensetzung gemäß einem der Ansprüche 1 bis 10 auf einer Oberfläche des Gegenstands.

14. Verfahren nach Anspruch 13, wobei das Auftragen ein Aufsprühen, Streichen, Rollen und/oder Rakeln der Zusammensetzung auf der Oberfläche des Gegenstands oder ein Tauchen des Gegenstands in die Zusammensetzung umfasst.

15. Harzhaltige Beschichtung, gebildet aus einer Zusammensetzung gemäß einem der Ansprüche 1 bis 10 bzw. erhältlich nach einem Verfahren gemäß Anspruch 13 oder 14.
